# EUROPÄISCHE PATENTSCHRIFT

(11) **EP 1 888 372 B1**
(45) Veröffentlichungstag und Bekanntmachung des Hinweises auf die Patenterteilung: **19.08.2009**
(21) Anmeldenummer: 06754062.5
(22) Anmeldetag: 02.06.2006
(51) Int. Cl.: B60R 16/00, G05B 19/048, G05B 9/02

(54) **SIGNALVERARBEITUNGSSYSTEM MIT SCHNELLER SIGNALVERARBEITUNG**
SIGNAL PROCESSING SYSTEM WITH RAPID SIGNAL PROCESSING
SYSTEME DE TRAITEMENT DE SIGNAL A TRAITEMENT DE SIGNAL RAPIDE

(30) Priorität: 09.06.2005 DE 102005026477
(43) Veröffentlichungstag der Anmeldung: 20.02.2008
(73) Patentinhaber: ZF FRIEDRICHSHAFEN Aktiengesellschaft, 88038 Friedrichshafen (DE)
(72) Erfinder: BUERKER, Rainer, 88214 Ravensburg (DE); STEINBORN, Mario, 88046 Friedrichshafen (DE)
(86) Internationale Anmeldenummer: PCT/EP2006/005257
(87) Internationale Veröffentlichungsnummer: WO 2006/131269

(56) Entgegenhaltungen:
- EP-A- 0 647 890
- EP-A- 0 685 664
- DE-A1- 3 236 208
- DE-A1- 10 157 506
- DE-A1- 10 232 165
- DE-C1- 10 002 519

## Beschreibung

Die Erfindung betrifft ein Signalverarbeitungssystem mit schneller Signalverarbeitung, vorzugsweise für ein Kraftfahrzeug, beispielsweise für eine Getriebesteuerung eines Kraftfahrzeuges, gemäß dem Oberbegriff des Patentanspruchs 1, sowie ein Verfahren zur Durchführung einer schnellen Signalverarbeitung in einem Signalverarbeitungssystem gemäß Patentanspruch 7.

Von signalverarbeitenden Systemen ist es allgemein bekannt, dass durch ein z. B. manuell zu betätigendes Eingangsmodul ein Anforderungssignal ausgelöst wird, welches eine gewünschte Reaktion anfordert. Einem solchen Eingangsmodul ist in der Regel ein Signalverarbeitungsmodul nachgeschaltet, dessen Ausgangssignal einem Zielmodul zugeleitet wird, welches dann die angeforderte Reaktion durchführt.

Solche bekannten Signalverarbeitungssysteme werden beispielsweise bei der Steuerung von Getrieben in Kraftfahrzeugen genutzt. Diese oft komplexen elektronischen Systeme lassen sich grob in die drei eingangs genannten Module aufteilen, wobei das die gewünschte Reaktion anfordernde und ein dementsprechendes Anforderungssignal ausgebende Eingangsmodul ein manuell zu betätigender Getriebewählhebel bzw. Fahrschalter ist. Das die gewünschte Reaktion durchführende Zielmodul ist eine Getriebeausgangsstufe, die den gewünschten Gang bzw. die gewünschte Fahrtrichtung bereitstellt.

Das im Signalfluss dazwischen liegende Signalverarbeitungsmodul ist ein Getriebesteuergerät oder enthält zumindest Teile davon. Hierbei kann das Getriebesteuergerät separat aufgebaut oder auch mit einem Motorsteuergerät gemeinsam als ein Gerät realisiert sein. Das Zielmodul bzw. Aktuatormodul kann sowohl ein Bestandteil des Signalverarbeitungsmoduls als auch teilweise außerhalb desselben liegend ausgebildet sein.

Bevor in solchen bekannten komplexen Systemen das Ausgangssignal des Signalverarbeitungsmoduls an das Zielmodul übergeben wird, sind einige Verfahrensschritte durchzuführen. So werden unter anderem in einem Überprüfungsmodul die Plausibilität und die Zulässigkeit des Signals sowie die gewünschten Reaktionen des Getriebes im momentanen Fahr- bzw. Bewegungszustand des Fahrzeuges geprüft. Ist diese Überprüfung abgeschlossen, gibt das Ausgangssignal des Überprüfungsmoduls die weitere Bearbeitung der Schritte zur Erreichung der gewünschten Reaktion frei.

Dem Überprüfungsmodul können weitere Module nachgeschaltet sein, die in ihrer Gesamtheit voneinander abhängig sind und entweder nacheinander durchlaufen werden müssen, oder aber zumindest auf eine Tätigkeits-Freigabe durch ein einzelnes oder mehrere andere Module angewiesen sind.

Nachteilig daran ist, dass trotz der Verwendung von schnell schaltenden Logikbausteinen, hydraulischen Schaltelementen etc. ein für den Bediener subjektiv träges Verhalten des Gesamtsystems spürbar werden kann. Dieses kann einerseits zu Unzufriedenheit oder sogar zur Ablehnung von mit solchen Signalverarbeitungssystemen ausgestattetem technischen Gerät führen, andererseits aber auch zu unangenehmen Situationen, wenn beispielsweise im Straßenverkehr ein besonders schneller Gangwechsel bzw. das besonders schnelle Einlegen eines Fahrganges wünschenswert ist, dieses aber aufgrund der Systemträgheit erst mit einer für die bedienende Person spürbaren zeitlichen Verzögerung eintritt.

Aus der DE 32 36 208 A1 der Anmelderin ist eine elektronische Steuerung für Pressmüllfahrzeuge bekannt, die sich durch eine besonders hohe Betriebssicherheit auszeichnet. Durch drei parallel arbeitende Sicherheitseinrichtungen wird ein besonders zuverlässiges und gefahrloses Arbeiten eines Ladewerks des Pressmüllfahrzeugs erreicht.

Die DE 100 02 519 C1 der Anmelderin offenbart ein Verfahren zur Verhinderung von Fehlfunktionen in einem signalverarbeitenden System sowie ein Prozessorsystem zur Durchführung des Verfahrens. Das Prozessorsystem weist hierzu wenigstens eine Recheneinheit, eine Vergleichseinrichtung und eine Trendwert-Logik auf. Von der Recheneinheit wird eine Abfolge von Startwerten eingelesen. Aus den Startwerten bildet die Recheneinheit sowohl Ausgabewerte als auch Trendwerte, wobei die Trendwerte von der Recheneinheit aus den Ausgabewerten berechnet werden. Aus einem Vergleich zwischen einem mit der Trendwert-Logik erzeugten Trendwert und einem von der Recheneinheit gebildeten Trendwert kann auf die Funktionsfähigkeit des Systems geschlossen werden. Wenn die Trendwerte der Trendwert-Logik und der Recheneinheit identisch sind, dann schaltet die Vergleichseinheit den Ausgabewert auf einen Systembus.

Vor diesem Hintergrund liegt der Erfindung die Aufgabe zugrunde, ein Signalverarbeitungssystem mit schneller Signalverarbeitung anzugeben, welches die vorgenannten Nachteile vermeidet und bei gleicher Zuverlässigkeit zu einer schnelleren Ausführung der gewünschten Reaktion führt. Weiterhin soll ein Verfahren zur Durchführung einer schnellen Signalverarbeitung in einem Signalverarbeitungssystem angegeben werden, welches die genannten Nachteile des Standes der Technik vermeidet.

Die Lösung dieser Aufgaben ergibt sich hinsichtlich des Signalverarbeitungssystems aus den Merkmalen des Patentanspruchs 1 und für ein Verfahren zur Durchführung einer schnellen Signalverarbeitung aus den Merkmalen des Patentanspruchs 7, während vorteilhafte Ausgestaltungen und Weiterbildungen der Erfindung den Unteransprüchen entnehmbar sind.

Der Erfindung liegt die Erkenntnis zugrunde, dass es möglich ist, bestimmte Teilschritte eines gesamten Signalverarbeitungsprozesses parallel, das heißt zeitgleich abzuarbeiten, wobei einige Teilschritte quasi vorbereitend bereits durchlaufen werden, bevor dann die endgültige Freigabe durch ein anderes Modul bzw. ein anderes Signal erfolgt.

Demnach geht die Erfindung aus von einem Signalverarbeitungssystem mit schneller Signalverarbeitung, vorzugsweise für ein Kraftfahrzeug, beispielsweise für eine Getriebesteuerung eines Kraftfahrzeugs, mit einem die gewünschte Reaktion anfordernden und dabei ein Anforderungssignal ausgebenden Eingangsmodul, einem Signalverarbeitungsmodul und einem die gewünschte Reaktion ausführenden Zielmodul.

Zur Lösung der gestellten Aufgaben sieht die Erfindung hinsichtlich des Signalverarbeitungsmoduls zudem vor, dass das Signalverarbeitungsmodul ein jeweils das Anforderungssignal aufnehmendes Überprüfungsmodul und ein Zeittaktmodul aufweist, dass das Signalverarbeitungsmodul außerdem ein zwischen dem Eingangsmodul und dem Zeittaktmodul wirksames Aktuatormodul aufweist, dem Zeittaktmodul der Ausgang des Überprüfungsmoduls zugeführt ist, und bei dem das Aktuatormodul das Ausgangssignal des Signalverarbeitungsmoduls übertragend mit dem Zielmodul in Verbindung steht.

Durch diesen Aufbau ist es möglich, dass ein Anforderungssignal hinsichtlich einer Systemreaktion in dem Überprüfungsmodul überprüfbar ist, während gleichzeitig eben dieses Anforderungssignal dazu genutzt wird, um parallel zu dessen Überprüfung schon eine eine Aktuatorbetätigung vorbereitende Berechnungs- und/oder Steuerungstätigkeit durchzuführen. Ergibt die Überprüfung, dass das Anforderungssignal plausibel und zulässig ist, so ist im Ergebnis keine Zeit für die Überprüfungsprozedur verloren gegangen, da die vorbereitende Steuerungstätigkeit zur Erreichung der angeforderten Systemreaktion parallel dazu abgelaufen ist. Sofern die Überprüfung des Anforderungssignals negativ ausfällt, kann die vorbereitende Berechnungs- und/oder Steuerungstätigkeit vor einer konkreten Aktuatorbetätigung abgebrochen werden.

Daher ist gemäß der Erfindung vorgesehen, dass das Überprüfungsmodul, das Zeittaktmodul und das Aktuatormodul bezüglich des aufgenommenen Anforderungssignals hinsichtlich ihrer Bearbeitungsfolge parallel zueinander angeordnet sind bzw. parallel zueinander mit dem Anforderungssignal beaufschlagt werden. Dieses ermöglicht es, dass zeitgleich bestimmte Schritte vorbereitend abgearbeitet werden können, ohne dass erst auf die Reaktion eines anderen Moduls gewartet werden muss.

Das Zeittaktmodul erhält daher initial die Information darüber, dass ein Anforderungssignal ausgelöst wurde und wartet auf das Ausgangssignal des Überprüfungsmoduls. Da dem Zeittaktmodul entweder vorprogrammiert bekannt ist, wie lange der Signalweg über das Aktuatormodul dauert oder aber dieses eine Rückmeldung über den erfolgreichen Abschluss aller notwendigen Schritte an das Zeittaktmodul liefert, kann dieses sofort dann das Auslösen der gewünschten Reaktion über das Aktuatormodul freigeben, wenn ein positives Signal des Überprüfungsmoduls vorliegt.

Vorzugsweise weist das Überprüfungsmodul daher auch ein Plausibilitätsmodul auf, in welchem anhand weiterer Kriterien und/oder Signale festgestellt wird, ob das Anforderungssignal überhaupt ein durch das Eingangsmodul ausgelöstes Signal sein kann bzw. ein solches ist. Dabei ist besonders bevorzugt vorgesehen, wenn parallel dazu ein Zulässigkeitsmodul angeordnet ist, welches anhand von weiteren Kriterien und/oder Signalen überprüft, ob die durch das Anforderungssignal beabsichtigte Reaktion derzeit, das heißt in der aktuellen Betriebssituation des Fahrzeugs, überhaupt zulässig ist.

In weiterer Ausgestaltung der Erfindung kann dann vorgesehen sein, dass innerhalb des Überprüfungsmoduls die Ausgänge des Plausibilitätsmoduls und des Zulässigkeitsmoduls einem Logikschalter zugeführt werden. Dies hat den Vorteil, dass wirklich nur dann, wenn beide Module positive Signale senden, dass Überprüfungsmodul sein positives Ausgangssignal an das Zeittaktmodul übergibt.

Unter dem Begriff "positiv" wird in diesem Zusammenhang nicht unbedingt eine mathematische Größe verstanden, vielmehr wird dadurch ausgedrückt, dass beim Vorliegen "positiver Signale" die Signalverarbeitung zur Erzeugung der angeforderten Systemreaktion weitergeführt werden kann.

Gemäß einer konkreten Ausführungsform der Erfindung ist vorgesehen, dass das Eingangsmodul als Getriebewählschalter eines einem Kraftfahrzeug zugeordneten Getriebes ausgebildet ist, dass das Aktuatormodul Komponenten des Getriebes umfasst, in welchen ein Gang- oder Fahrtrichtungswechsel vorbereitend durchgeführt wird, und dass das Zielmodul als eine die gewünschte Reaktion ausführende Kupplung ausgebildet ist.
Weiter kann vorgesehen sein, dass der Getriebewählschalter in einer H-förmigen Gasse geführt ausgebildet ist, und dass das Anforderungssignal durch sein Verschwenken in eine Vorwählgasse und/oder durch das fahrerseitige Einlegen eines neuen Zielgangs ausgelöst wird.

Die Erfindung geht zudem von einem Verfahren zur Durchführung einer schnellen Signalverarbeitung durch ein Signalverarbeitungssystem aus, enthaltend ein die gewünschte Reaktion anforderndes und dabei ein Anforderungssignal ausgebendes Eingangsmodul, ein Signalverarbeitungsmodul und ein die gewünschte Reaktion ausführendes Zielmodul, wobei das Verfahren die folgenden Schritte umfasst:
a) Zuführen des Anforderungssignals zu dem Signalverarbeitungsmodul;
b) paralleles Zuführen des Anforderungssignals innerhalb des Signalverarbeitungsmoduls jeweils zu einem Überprüfungsmodul und zu einem Zeittaktmodul;
c) paralleles Zuführen des Anforderungssignals zu einem zwischen dem Eingangsmodul und dem Zeittaktmodul wirksamen Aktuatormodul, um die notwendigen Schritte zum Auslösen der gewünschten Reaktion in dem Zielmodul vorzubereiten;
d) Zuführen des Ausgangssignals des Überprüfungsmoduls zum Zeittaktmodul;
e) Überprüfen innerhalb des Zeittaktmoduls, ob das Ausgangssignal des Überprüfungsmoduls vorliegt, und Freigabe des über das Aktuatormodul an das Zielmodul zu übertragenden Ausgangssignals des Signalverarbeitungsmoduls dann, wenn das Ausgangssignal des Überprüfungsmoduls positiv ist.

Diese Verfahrensweise hat den Vorteil, dass eine erhebliche Zeitspanne beanspruchende Maßnahmen zur Zielerreichung bereits eingeleitet werden können, ohne dass zunächst auf Entscheidungen aus anderen Modulen gewartet werden muss. Liegt dann die Freigabe aus den anderen Modulen vor, so haben diese vorbereitenden Maßnahmen bereits zu einer deutlichen Verkürzung der insgesamt benötigten Zeit geführt, wenn dann endgültig die gewünschte Reaktion auszuführen ist. Wird diese gewünschte Reaktion aufgrund der Entscheidungen in anderen Modulen verworfen und daher nicht ausgeführt, so verbleibt das Gesamtsystem zumindest mechanisch in dem Zustand, den es vor Abgabe des Anforderungssignals hatte.

Dabei wird es bevorzugt, dass nach dem Schritt c) in dem Zeittaktmodul ein Plausibilitätszeitschalter gestartet wird, und dass dann, wenn innerhalb eines vorgegebenen Plausibilisierungszeitraumes das redundante Signal anliegt, also die Plausibilisierungsprüfung und die Zulässigkeitsprüfung erfolgreich waren, ein die gewünschte Reaktion freigebendes Ausgangssignal vom Zeittaktmodul an das Aktuatormodul übergeben wird.

Abschließend sei darauf hingewiesen, dass die beschriebene Erfindung sowohl hinsichtlich der Vorrichtung als auch hinsichtlich des Verfahrens unabhängig von der Art der Signalentstehung des Anforderungssignals mit den beschriebenen Vorteilen arbeitet. So kann das Anforderungssignal durch den Fahrer selbst, also beispielsweise durch eine Betätigung eines Getriebewählhebels ausgelöst sein, oder aber aufgrund von Sensorinformationen entstanden sein, auf deren Grundlage ein vollautomatisches Getriebe hinsichtlich seiner Übersetzungsänderungstätigkeit gesteuert wird.

Zur Verdeutlichung der Erfindung ist der Beschreibung eine schematische Zeichnung eines Ausführungsbeispiels beigefügt. Es sei darauf hingewiesen, dass die Erfindung in einer Vielzahl von Signalverarbeitungssystemen vorteilhaft eingesetzt werden kann, vorzugsweise in solchen von Personen- oder Lastkraftwagen, Bussen, Bahnen oder sonstigen Sonderfahrzeugen. Ebenso ist zu beachten, das dann, wenn nachfolgend von Signalübertragung gesprochen wird, dieses sowohl elektrische als auch mechanisch übertragene Signale umfassen kann. Daher kann der Begriff "Signalleitungen" auch im Sinne von Signalübertragungswege für mechanische Glieder verstanden werden.

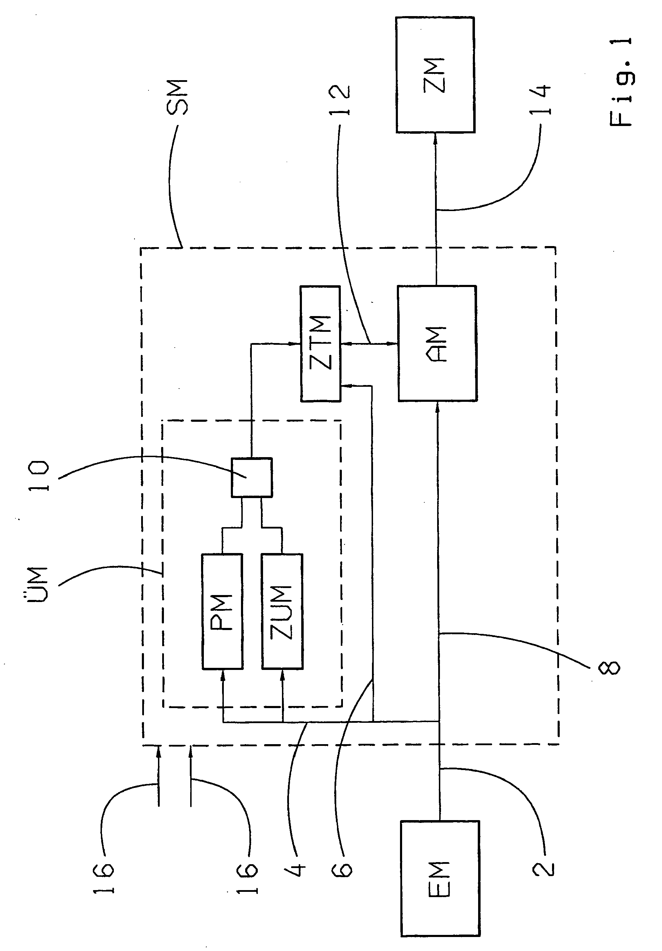

Die Zeichnung zeigt ein Eingangsmodul EM, welches nach einer Betätigung ein eine gewünschte Reaktion anforderndes Anforderungssignal über eine Signalleitung 2 eines Datenbussystems an ein Signalverarbeitungsmodul SM übergibt.

Innerhalb des Signalverarbeitungsmoduls SM wird das Auslösen des Anforderungssignals parallel über entsprechende Signalwege 4, 6 und 8 einem Überprüfungsmodul ÜM, einem Zeittaktmodul ZTM und einem Aktuatormodul AM zugeführt.

Das Überprüfungsmodul ÜM weist ein Plausibilitätsmodul PM und in paralleler Anordnung dazu ein Zulässigkeitsmodul ZUM auf. Deren Ausgänge werden einem Logikschalter 10 zugeführt, der nur dann ein positives Aus gangssignal an das Zeittaktmodul ZTM weitergibt, wenn die Anforderung sowohl plausibel wie auch zulässig ist.

Zeitgleich zu den Vorgängen im Überprüfungsmodul ÜM bereitet das Aktuatormodul AM alle notwendigen Schritte und Maßnahmen vor, die bereits ohne Rückmeldung aus dem Zeittaktmodul ZTM durchgeführt werden können, ohne jedoch bereits das die gewünschte Reaktion ausführende Zielmodul anzusteuern. Erfolgt die Freigabe aus dem Logikschalter 10 an das Zeittaktmodul ZTM, so gibt dieses ein entsprechendes Signal an das Aktuatormodul AM über eine Steuerleitung 12 ab.

Ist das Aktuatormodul AM dann bereits mit dem internen Durchlauf aller Schritte fertig, erfolgt das sofortige Durchschalten des Ausgangssignals des Überprüfungsmoduls ÜM über eine Signalleitung 14 an das Zielmodul ZM, welches abschließend die gewünschte Reaktion ausführt.

Als konkrete Ausführungsform in einem automatisierten Getriebe für ein Kraftfahrzeug mit redundanten Signalen für die Fahrtrichtungsanforderung eines Fahrschalters oder Getriebewählschalter ist das Eingangsmodul EM der genannte Fahrschalter.

Beispielsweise fordert der Fahrer des Kraftfahrzeugs im Stillstand einen Fahrtrichtungswechsel an. Das dabei vom Fahrschalter ausgehende Anforderungssignal gelangt zeitgleich über die Signalleitungen 4, 6 und 8 an das Überprüfungsmodul ÜM, das Zeittaktmodul ZTM und das Aktuatormodul AM. Das Aktuatormodul AM symbolisiert in diesem Beispiel alle die Komponenten des Automatgetriebes einschließlich der Ausgangskupplung, die vorbereitende Schritte durchführen können, ohne dass diese Kupplung die gewünschte Reaktion auslösend geschlossen wird.

Je nachdem, über welchen Signalweg zuerst eine Freigabe an das Zeittaktmodul ZTM gemeldet wird, erfolgt eine finale Freigabe des Kupplungsschließens entweder, nachdem zuerst das Aktuatormodul AM und dann das Überprüfungsmodul ÜM entsprechende Signale abgegeben haben, oder nachdem zuerst das Überprüfungsmodul ÜM und dann das Aktuatormodul AM diese Signale abgesetzt hat.

Während des Durchlaufes des Anforderungssignals durch das Überprüfungsmodul ÜM wird das Signal zeitgleich dem Plausibilitätsmodul PM und dem Zulässigkeitsmodul ZUM aufgeschaltet. Anhand einer Reihe von symbolisch durch Pfeile 16 angedeuteten und dem Signalverarbeitungsmodul SM zugeführten Signalen wird überprüft, ob das Anforderungssignal überhaupt ein solches ist, und ob es in dem momentanen Bewegungszustand des Fahrzeuges zulässig ist. Fallen beide Überprüfungen positiv aus, erfolgt eine Freigabe über den Logikschalter 10, anderenfalls wird die angeforderte Reaktion momentan nicht freigegeben und das Aktuatormodul AM schaltet in die Ausgangsgetriebeposition zurück.

Alternativ dazu kann auch vorgesehen sein, dass im Zeittaktmodul ein Plausibilitätszeitschalter gestartet wird, sobald das Anforderungssignal anliegt. Erst dann, wenn innerhalb eines vorgegebenen Plausibilisierungszeitraumes das redundante Signal vorliegt und damit die Plausibilisierung sowie die Zulässigkeitsprüfung erfolgreich waren, wird die vom Fahrer angeforderte Fahrtrichtungsanforderung zur Ausführung freigegeben.

In einem anderen Ausführungsbeispiel einer Getriebebetätigungsvorrichtung mit einer H-Schaltung für ein automatisiertes Getriebe ergibt sich folgender Vorteil. Üblicherweise wird für einen Gangwechsel des Getriebes der Wählhebel durch den Fahrer zunächst nach Neutral bewegt; anschließend erfolgt sein Verschwenken in der Vorwählgasse bis dann abschließend der neue Zielgang eingelegt wird. Dabei wird bekanntermaßen das Feststellen der Wählhebelpositionen Neutral und/oder gewählte Gasse durch elektronische Filterung und/oder Entprellung des Anforderungssignals plausibilisiert. Erst wenn dieser Vorgang abgeschlossen ist erfolgt die Weiterführung der Schaltung.

Erfindungsgemäß wird nun beim ersten Erkennen von Neutral und/oder der gewählten Position des Wählhebels unmittelbar und sofort der Schaltablauf über das Aktuatormodul AM fortgeführt, bis das Überprüfungsmodul ÜM in der nachfolgenden Schaltphase sein Ausgangssignal liefert. Somit kann es zu einer deutlichen Verkürzung der Schaltzeit kommen. Sofern das Überprüfungsmodul ÜM das Anforderungssignal des Wählhebels nicht freigibt, wird die beispielsweise mechanisch schon weit fortgeschrittene Schaltung im Getriebe abgebrochen und der Ausgangszustand wieder hergestellt.

### Bezugszeichenliste

- 2: Signalleitung
- 4: Signalweg
- 6: Signalweg
- 8: Signalweg
- 10: Logikschalter
- 12: Steuerleitung
- 14: Signalleitung
- 16: Pfeil

- AM: Aktuatormodul
- EM: Eingangsmodul
- PM: Plausibilitätsmodul
- SM: Signalverarbeitungsmodul
- ÜM: Überprüfungsmodul
- ZM: Zielmodul
- ZTM: Zeittaktmodul
- ZUM: Zulässigkeitsmodul

## Patentansprüche

1. Signalverarbeitungssystem mit schneller Signalverarbeitung, vorzugsweise für ein Kraftfahrzeug, beispielsweise für eine Getriebesteuerung eines Kraftfahrzeugs, mit einem die gewünschte Reaktion anfordernden und dabei ein Anforderungssignal ausgebenden Eingangsmodul (EM), einem Signalverarbeitungsmodul (SM) und einem die gewünschte Reaktion ausführenden Zielmodul (ZM), **dadurch gekennzeichnet, dass** das Signalverarbeitungsmodul (SM) ein jeweils das Anforderungssignal aufnehmendes Überprüfungsmodul (ÜM), ein Zeittaktmodul (ZTM) und ein Aktuatormodul (AM) aufweist, dass das Aktuatormodul (AM) mit dem Zeittaktmodul (ZTM) in Verbindung steht, dass dem Zeittaktmodul (ZTM) der Ausgang des Überprüfungsmoduls (ÜM) zugeführt ist, dass das Aktuatormodul (AM) das Ausgangssignal des Signalverarbeitungsmoduls (SM) übertragend mit dem Zielmodul (ZM) in Verbindung steht und dass das Überprüfungsmodul (ÜM), das Zeittaktmodul (ZTM) und das Aktuatormodul (AM) parallel zueinander mit dem Anforderungssignal beaufschlagt werden, wobei im Überprüfungsmodul (ÜM) eine Überprüfung des Anforderungssignals stattfindet, während zeitgleich im Aktuatormodul (AM) durch das ungeprüfte Anforderungssignal bestimmte Schritte vorbereitend abgearbeitet werden.

2. Signalverarbeitungssystem nach Anspruch 1, **dadurch gekennzeichnet, dass** die Freigabe des Ausgangssignals dann erfolgt, wenn das Überprüfungsmodul (ÜM) ein positives Signal und das Aktuatormodul (AM) eine Rückmeldung über einen erfolgreichen Abschluss aller notwendigen Schritte an das Zeittaktmodul (ZTM) liefern oder wenn ein positives Signal des Überprüfungsmoduls (ÜM) innerhalb eines vorgebbaren Plausibilisierungszeitraums an dem Zeittaktmodul (ZTM) anliegt.

3. Signalverarbeitungssystem nach Anspruch 1 oder 2, **dadurch gekennzeichnet, dass** das Überprüfungsmodul (ÜM) ein Plausibilitätsmodul (PM) und ein Zulässigkeitsmodul (ZUM) aufweist.

4. Signalverarbeitungssystem nach Anspruch 3, **dadurch gekennzeichnet, dass** das Plausibilitätsmodul (PM) und das Zulässigkeitsmodul (ZUM) hinsichtlich der Signalverarbeitung parallel zueinander angeordnet sind und ihre Ausgänge einem Logikschalter (10) zugeführt sind.

5. Signalverarbeitungssystem nach wenigstens einem der vorherigen Ansprüche, **dadurch gekennzeichnet, dass** das Eingangsmodul (EM) als Getriebewählschalter eines einem Kraftfahrzeug zugeordneten Getriebes ausgebildet ist, und dass das Aktuatormodul (AM) Komponenten des Getriebes umfasst, in welchen ein Gang- oder Fahrtrichtungswechsel vorbereitend durchgeführt wird, und dass das Zielmodul als eine die gewünschte Reaktion ausführende Kupplung ausgebildet ist.

6. Signalverarbeitungssystem nach Anspruch 5, **dadurch gekennzeichnet, dass** der Getriebewählschalter in einer H-förmigen Gasse geführt ausgebildet ist, und dass das Anforderungssignal durch sein Verschwenken in eine Vorwählgasse und/oder einen neuen Zielgang ausgelöst wird.

7. Verfahren zur Durchführung einer schnellen Signalverarbeitung in einem Signalverarbeitungssystem, enthaltend ein die gewünschte Reaktion anforderndes und dabei ein Anforderungssignal ausgebendes Eingangsmodul (EM), ein Signalverarbeitungsmodul (SM) und ein die gewünschte Reaktion ausführendes Zielmodul (ZM), mit den Verfahrensschritten:
a) Zuführen des Anforderungssignals zu dem Signalverarbeitungsmodul (SM) ;
b) paralleles Zuführen des Anforderungssignals innerhalb des Signalverarbeitungsmoduls (SM) jeweils zu einem Überprüfungsmodul (ÜM), zu einem Zeittaktmodul (ZTM) und zu einem zwischen dem Eingangsmodul (EM) und dem Zeittaktmodul (ZTM) wirksamen Aktuatormodul (AM);
c) Überprüfen des Anforderungssignals im Überprüfungsmodul (ÜM), während zeitgleich im Aktuatormodul (AM) durch das ungeprüfte Anforderungssignal notwendige Schritte zum Auslösen der gewünschten Reaktion in dem Zielmodul (ZM) vorbereitend abgearbeitet werden;
d) Zuführen des Ausgangssignals des Überprüfungsmoduls (ÜM) zum Zeittaktmodul (ZTM);
e) Überprüfen innerhalb des Zeittaktmodul (ZTM), ob das Ausgangssignal des Überprüfungsmoduls (ÜM) vorliegt;
f) Freigabe des über das Aktuatormodul (AM) an das Zielmodul (ZM) übertragenen Ausgangssignals des Signalverarbeitungsmoduls (SM) dann, wenn das Ausgangssignal des Überprüfungsmoduls (ÜM) positiv ist und das Aktuatormodul (AM) eine Rückmeldung über den erfolgreichen Abschluss aller notwendigen Schritte an das Zeittaktmodul (ZTM) geliefert hat.

8. Verfahren nach Anspruch 7, **dadurch gekennzeichnet, dass** beim Zuführen des Anforderungssignals nach Schritt b) im Zeittaktmodul (ZTM) ein Plausibilitätszeitschalter gestartet wird, und dass eine Freigabe nach Schritt f) dann erfolgt, wenn innerhalb eines vorgegebenen Plausibilisierungszeitraumes die Plausibilisierung sowie die zulässigkeitsprüfung erfolgreich waren.

## Claims

1. Signal processing system with rapid signal processing, preferably for a motor vehicle, for example for a transmission controller of a motor vehicle, having an input module (EM) which requests the desired reaction and outputs a request signal in the process, a signal processing module (SM), and a target module (ZM) which performs the desired reaction, **characterized in that** the signal processing module (SM) has a checking module (ÜM) which respectively receives the request signal, a timing clock module (ZTM) and an actuator module (AM), **in that** the actuator module (AM) is connected to the timing clock module (ZTM), **in that** the output from the checking module (ÜM) is supplied to the timing clock module (ZTM), **in that** the actuator module (AM) is connected to the target module (ZM) so as to transmit the output signal from the signal processing module (SM), and **in that** the request signal is applied to the checking module (ÜM), the timing clock module (ZTM) and the actuator module (AM) in a parallel manner, the request signal being checked in the checking module (ÜM), while steps determined by the unchecked request signal are executed in a preparatory manner at the same time in the actuator module (AM).

2. Signal processing system according to Claim 1, **characterized in that** the output signal is enabled when the checking module (ÜM) provides the timing clock module (ZTM) with a positive signal and the actuator module (AM) provides the timing clock module (ZTM) with feedback on successful completion of all necessary steps or when a positive signal from the checking module (ÜM) is applied to the timing clock module (ZTM) within a predefinable plausibility-checking period.

3. Signal processing system according to Claim 1 or 2, **characterized in that** the checking module (ÜM) has a plausibility module (PM) and a permissibility module (ZUM).

4. Signal processing system according to Claim 3, **characterized in that** the plausibility module (PM) and the permissibility module (ZUM) are arranged parallel to one another with regard to signal processing and their outputs are supplied to a logic switch (10).

5. Signal processing system according to at least one of the preceding claims, **characterized in that** the input module (EM) is in the form of a transmission selector switch of a transmission associated with a motor vehicle, and **in that** the actuator module (AM) comprises components of the transmission, in which a gear change or a change in the direction of travel is effected in a preparatory manner, and **in that** the target module is in the form of a clutch which performs the desired reaction.

6. Signal processing system according to Claim 5, **characterized in that** the transmission selector switch is designed such that it is guided in an H-shaped slot, and **in that** the request signal is triggered by said switch being pivoted into a preselector slot and/or by a new target gear speed.

7. Method for carrying out rapid signal processing in a signal processing system containing an input module (EM) which requests the desired reaction and outputs a request signal in the process, a signal processing module (SM), and a target module (ZM) which performs the desired reaction, having the method steps of:
a) supplying the request signal to the signal processing module (SM);
b) respectively supplying the request signal inside the signal processing module (SM) to a checking module (ÜM), to a timing clock module (ZTM) and to an actuator module (AM), which is effective between the input module (EM) and the timing clock module (ZTM), in a parallel manner;
c) checking the request signal in the checking module (ÜM), while steps needed to trigger the desired reaction in the target module (ZM) are executed in a preparatory manner at the same time in the actuator module (AM) by virtue of the unchecked request signal;
d) supplying the output signal from the checking module (ÜM) to the timing clock module (ZTM);
e) checking whether the output signal from the checking module (ÜM) is present inside the timing clock module (ZTM);
f) enabling the output signal from the signal processing module (SM), which signal has been transmitted to the target module (ZM) via the actuator module (AM), when the output signal from the checking module (ÜM) is positive and the actuator module (AM) has provided the timing clock module (ZTM) with feedback on the successful completion of all necessary steps.

8. Method according to Claim 7, **characterized in that** a plausibility time switch is started in the timing clock module (ZTM) when supplying the request signal according to step b), and **in that** enabling according to step f) is effected when the plausibility check and the permissibility check were successful within a predefined plausibility-checking period.

## Revendications

1. Système de traitement de signal avec traitement rapide du signal, de préférence pour un véhicule automobile, par exemple pour la commande d'une boîte de transmission d'un véhicule automobile, comprenant un module d'entrée (EM) qui demande la réaction souhaitée et délivre à cette occasion un signal de demande, un module de traitement de signal (SM) et un module cible (ZM) qui exécute la réaction souhaitée, **caractérisé en ce que** le module de traitement de signal (SM) présente un module de contrôle (ÜM) qui reçoit à chaque fois le signal de demande, un module de cycle d'horloge (ZTM) et un module actionneur (AM), que le module actionneur (AM) est relié au module de cycle d'horloge (ZTM), que la sortie du module de contrôle (ÜM) est acheminée au module de cycle d'horloge (ZTM), que le module actionneur (AM) est relié avec le module cible (ZM) en transmettant le signal de sortie du module de traitement de signal (SM) et que le module de contrôle (ÜM), le module de cycle d'horloge (ZTM) et le module actionneur (AM) sont soumis parallèlement l'un à l'autre au signal de demande, un contrôle du signal de demande ayant lieu dans le module de contrôle (ÜM) pendant que les étapes déterminées par le signal de demande non contrôlé sont simultanément exécutées à titre préparatoire dans le module actionneur (AM).

2. Système de traitement de signal selon la revendication 1, **caractérisé en ce que** la validation du signal de sortie a lieu lorsque le module de contrôle (ÜM) délivre au module de cycle d'horloge (ZTM) un signal positif et le module actionneur (AM) lui délivre une confirmation de l'accomplissement réussi de toutes les étapes nécessaires ou lorsqu'un signal positif du module de contrôle (ÜM) est présent sur le module de cycle d'horloge (ZTM) pendant une période de plausibilité pouvant être prédéfinie.

3. Système de traitement de signal selon la revendication 1 ou 2, **caractérisé en ce que** le module de contrôle (ÜM) présente un module de plausibilité (PM) et un module d'admissibilité (ZUM).

4. Système de traitement de signal selon la revendication 3, **caractérisé en ce que** le module de plausibilité (PM) et le module d'admissibilité (ZUM) sont disposés en parallèle l'un à l'autre du point de vue du traitement du signal et leurs sorties sont acheminées à un commutateur logique (10).

5. Système de traitement de signal selon au moins l'une des revendications précédentes, **caractérisé en ce que** le module d'entrée (EM) est réalisé sous la forme d'un sélecteur de boîte de transmission d'une boîte de transmission associée à un véhicule automobile et que le module actionneur (AM) comprend des composants de la boîte de transmission dans lesquels est effectué à titre préparatoire un changement de rapport ou de sens de déplacement et que le module cible est réalisé sous la forme d'un accouplement qui exécute la réaction souhaitée.

6. Système de traitement de signal selon la revendication 5, **caractérisé en ce que** le sélecteur de boîte de transmission est configuré pour être guidé dans une voie en forme de H et que le signal de demande est déclenché par un basculement dans une voie de présélection et/ou un nouveau rapport cible.

7. Procédé pour effectuer un traitement de signal rapide dans un système de traitement de signal, comprenant un module d'entrée (EM) qui demande la réaction souhaitée et délivre à cette occasion un signal de demande, un module de traitement de signal (SM) et un module cible (ZM) qui exécute la réaction souhaitée, comprenant les étapes suivantes :
a) Acheminement du signal de demande au module de traitement de signal (SM) ;
b) Acheminement en parallèle du signal de demande à l'intérieur du module de traitement de signal (SM) à chaque fois à un module de contrôle (ÜM), à un module de cycle d'horloge (ZTM) et à un module actionneur (AM) qui agit entre le module d'entrée (EM) et le module de cycle d'horloge (ZTM) ;
c) Contrôle du signal de demande dans le module de contrôle (ÜM) pendant que les étapes requises par le signal de demande non contrôlé sont simultanément exécutées à titre préparatoire dans le module actionneur (AM) en vue de déclencher la réaction souhaitée dans le module cible (ZM) ;
d) Acheminement du signal de sortie du module de contrôle (ÜM) au module de cycle d'horloge (ZTM) ;
e) Contrôle, à l'intérieur du module de cycle d'horloge (ZTM), de la présence du signal de sortie du module de contrôle (ÜM) ;
f) Validation du signal de sortie du module de traitement de signal (SM) transmis au module cible (ZM) par le biais du module actionneur (AM) lorsque le signal de sortie du module de contrôle (ÜM) est positif et que le module actionneur (AM) a délivré une confirmation de l'accomplissement réussi de toutes les étapes nécessaires au module de cycle d'horloge (ZTM).

8. Procédé selon la revendication 7, **caractérisé en ce qu'**un commutateur temporisé de plausibilité est démarré lors de l'acheminement du signal de demande dans le module de cycle d'horloge (ZTM) selon l'étape b), et qu'une validation selon l'étape f) a lieu si le contrôle de plausibilité et le contrôle d'admissibilité ont réussi pendant une période de plausibilité prédéfinie.
